# EUROPEAN PATENT APPLICATION

(11) **EP 2 657 136 A1**
(43) Date of publication of application: **30.10.2013**
(21) Application number: 11850682.3
(22) Date of filing: 15.12.2011
(51) Int. Cl.: B64G 1/64, B64G 1/38, F16F 15/02, F16F 15/04, F16F 15/073

(54) **ADAPTOR AND PAYLOAD-LAUNCHING ROCKET**

(30) Priority: 22.12.2010 JP 2010286138
(71) Applicant: Mitsubishi Heavy Industries, Ltd., Tokyo 108-8215 (JP)
(72) Inventor: TOMBE, Toshihiro, Tokyo 108-8215 (JP)
(74) Representative: Intès, Didier Gérard André
(86) International application number: PCT/JP2011/079047
(87) International publication number: WO 2012/086515

(57) **Abstract**

An object is to provide an adaptor that can attenuate a vibration acting on a payload using a simple structure, and a payload launch vehicle. The adaptor (1) according to the invention controls a vibration of the payload housed in the payload launch vehicle, and is provided between the payload and a rocket portion. The adaptor (1) includes a tube member having a double structure including an outer tube (11) and an inner tube (12); a first elastic member (21) coupled to the outer tube (11) and the inner tube (12) at one end of the tube member; and a second elastic member (22) coupled to the outer tube and the inner tube at the other end of the tube member. The adaptor (1) is linked to the payload on the inner tube side or the outer tube side on one end side of the tube member, and linked to a leading end of the rocket portion on the outer tube side or the inner tube side on the other end side of the tube member.

## Description

### {Technical Field}

The invention relates to an adaptor installed between a payload and a rocket portion, and to a payload launch vehicle provided with the adaptor.

### {Background Art}

A payload launch vehicle has a payload such as an artificial satellite and a probe vehicle loaded therein on a leading end side of a rocket portion including a fuel portion and a rocket engine. To attenuate a vibration acting on the payload in flight of the launch vehicle, a buffer or the like is installed between the payload and the rocket portion.

PTL 1 discloses a technology that relates to isolation of a load vibration by using a damper provided in a launch vehicle. Also, PTL 2 discloses a technology that relates to a vibration control mechanism including a buffering cylinder apparatus for preventing a vibration in the rocket axis direction and a rocking of a payload. Furthermore, PTL 3 discloses a technology that relates to a vibration control mechanism including a buffer for buffering a vibration in the rocket axis direction and a torsion bar for preventing a rocking of a payload.

### {Citation List}

### {Patent Literature}

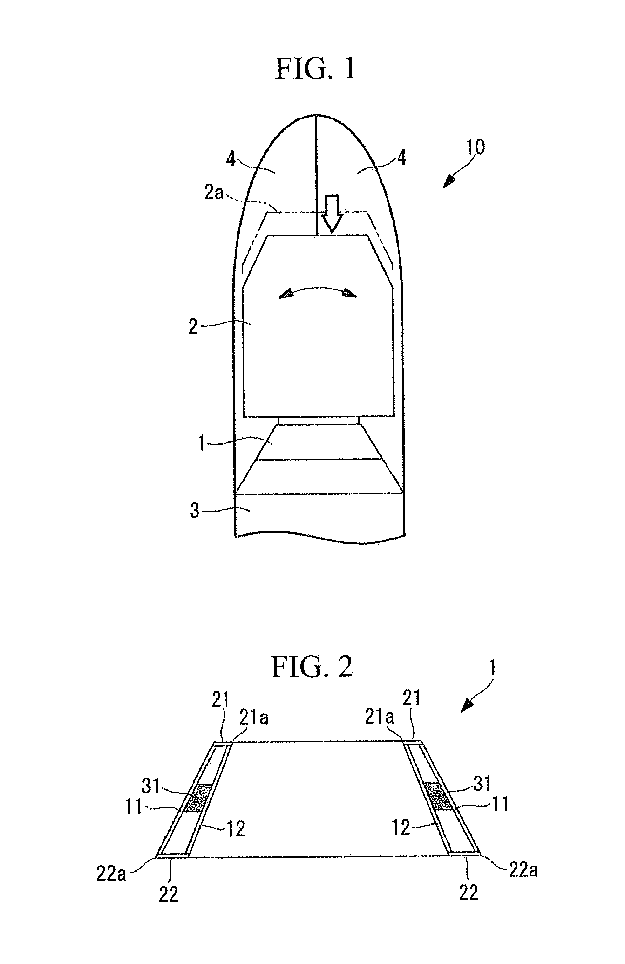

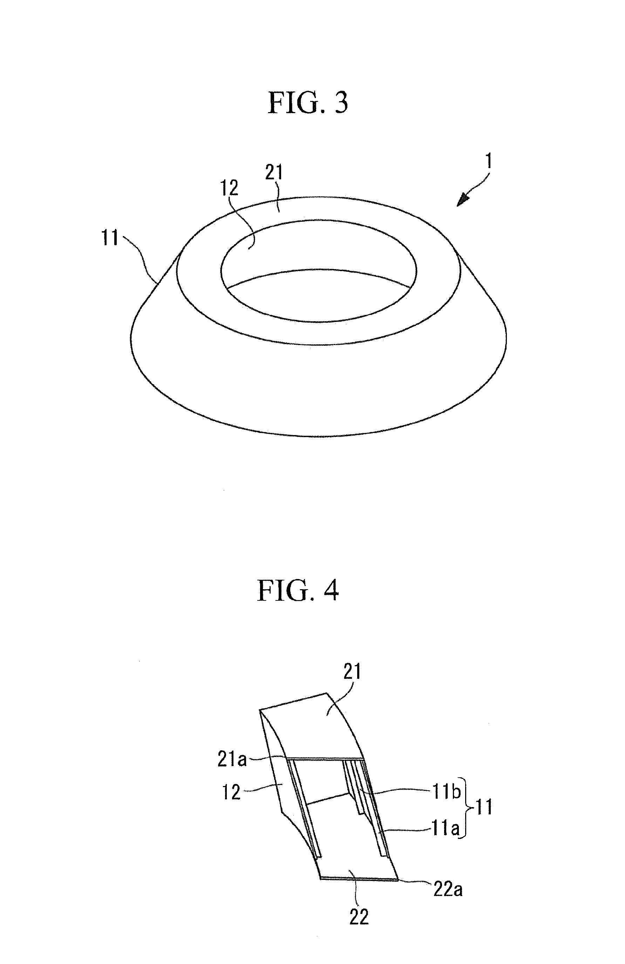

{PTL 1}
   Japanese Translation of PCT International Application, Publication No. 2001-509866 (Fig. 2a, Fig. 2b, and Fig. 3)
{PTL 2}
   Japanese Unexamined Patent Application, Publication No. 2000-289697 (Fig. 1 and Fig. 2)
{PTL 3}
   Japanese Unexamined Patent Application, Publication No. 2000-289699 (Fig. 1 and Fig. 2)

### {Summary of Invention}

### {Technical Problem}

A main vibration load in a rocket is in a rocket axis direction, and a high frequency vibration can be controlled so as not to be transmitted by disposing a spring having a low rigidity between a payload and a rocket portion. However, there arises the problem that the payload experiences a larger rocking motion because an upper end of the payload is not fixed on the rocket and only the lower end is fixed to the spring such as a buffer. Accordingly, in PTL 1, a combination of a plurality of dampers attenuates a translational motion and a rotary motion. Also, in PTL 2, provision of a buffering cylinder apparatus including a vertical cylinder and a horizontal cylinder connected to the vertical cylinder simultaneously controls a vibration in a rocket axis direction and a rocking of the payload. Furthermore, PTL 3 enables a rocking of the payload to be controlled by disposing a laminated rubber having a low rigidity in the axis direction and disposing a torsion bar.

However, the vibration control mechanisms disclosed in PTL 1, PTL 2 and PTL 3 have the problem that they are complex due to many configuration components, resulting in an increase in weight of the launch vehicle. Further, in these vibration control mechanisms, a cost of each of the components, a cost for assembling them and a cost needed for product management are high. Furthermore, because of complexity of the mechanisms, it is difficult to secure the overall reliability of the vibration control mechanisms. That is, unfortunately, it is not easy to secure stability in quality due to many causes such as nonlinearities in dynamic characteristics of the laminated rubber and the link mechanism for configuring the vibration control mechanisms, temperature characteristics, and variations in assembling tolerances.

The invention has been made in view of the situations described above, and its object is to provide an adaptor that can attenuate a vibration acting on a payload using a simple structure and a payload launch vehicle.

### {Solution to Problem}

To solve the problem described above, an adaptor and a payload launch vehicle according to the invention employ the following solutions.
That is, an adaptor according to a first aspect of the invention is an adaptor for controlling a vibration of a payload housed in a payload launch vehicle and provided between the payload and a rocket portion, in which the adaptor includes a tube member having a double structure including an outer tube and an inner tube, a first elastic member coupled to the outer tube and the inner tube at one end of the tube member and a second elastic member coupled to the outer tube and the inner tube at the other end of the tube member, and the adaptor is linked to the payload on the inner tube side or the outer tube side on one end side of the tube member, and linked to a leading end of the rocket portion on the outer tube side or the inner tube side on the other end side of the tube member.

According to the first aspect of the invention, while the tube member is coupled to the first elastic member at one end and coupled to the second elastic member at the other end, the tube member is linked to the payload such as an artificial satellite on the inner tube side (or the outer tube side) of one end of the tube member, and linked to the leading end of the rocket portion on the outer tube side (or the inner tube side) of the other end of the tube member. Then, when a vibration load acts in the rocket axis direction, the first elastic member and the second elastic member are bent to be deformed in the axis direction, thus controlling the vibration in the axis direction of the payload. When a rocking vibration acts, the first elastic member and the second elastic member withstand through rigidity in the direction of axial force, thus controlling the rocking vibration of the payload. The tube member may be in a truncated cone shape or a cylinder shape, and its plane is not limited to a circular shape, and may have a polygonal pyramid shape having a polygon such as a square, or a polygonal column shape.

In the first aspect of the invention, the first elastic member or the second elastic member preferably has rigidity in a direction perpendicular to a rocket axis direction higher than that in the rocket axis direction.

According to the first aspect of the invention, the first elastic member or the second elastic member has a lower bending rigidity and a higher tensile and compression rigidities, thus softly controlling a vibration in the rocket axis direction through bending deformation in response to the vibration in the rocket axis direction, and controlling a rocking vibration by getting rigid in the axis direction in response to the rocking vibration. The first elastic member or the second elastic member may be, for example, a leaf spring in a ring shape coupled to the inner tube and the outer tube, or a plurality of rod-shaped members coupled to the inner tube and the outer tube and provided in a radial manner seen from the upper portion or the lower portion.

In the first aspect of the invention, a first damping member may be provided along the first elastic member or the second elastic member.

According to the first aspect of the invention, the first damping member can efficiently attenuate a vibration in the rocket axis direction and a rocking vibration acting on the payload. When the first elastic member or the second elastic member is, for example, a leaf spring, the first damping member is a viscoelastic member attached to the leaf spring. The viscoelastic member may be configured to be installed between a restraint and the leaf spring. The restraint is a member that is less deformed than the leaf spring, so that the viscoelastic member can further get distorted.

In the first aspect of the invention, a second damping member may be provided between the outer tube and the inner tube.

According to the first aspect of the invention, a vibration in the rocket axis direction and a rocking vibration acting on the payload can be efficiently attenuated. The second damping member is provided in a double structure including the outer tube and the inner tube, and is, for example, a viscoelastic member or a wire-rope (for example, Wire Rope Isolators available from ITT ENIDINE INC,).

In the first aspect of the invention, the first elastic member or the second elastic member may be a leaf spring.

If the first elastic member or the second elastic member is a leaf spring, the first elastic member or the second elastic member can control a vibration of the payload in the rocket axis direction and a rocking vibration in the structurally stable manner.

The payload launch vehicle according to a second aspect of the invention includes the adaptor in any configurations described above.

According to the second aspect of the invention, the adaptor can control a vibration in the rocket axis direction and a rocking vibration of the payload, thus eliminating complex members to configure a vibration control mechanism and allowing the vibration to be reduced using a simple and reliable structure.

### {Advantageous Effects of Invention}

According to the invention, a vibration acting on the payload can be reduced using a simple structure.

### {Brief Description of Drawings}

{Fig. 1}
   Fig. 1 is a longitudinal, cross-sectional view illustrating a leading end portion of a launch vehicle of the invention;
{Fig. 2}
   Fig. 2 is a longitudinal, cross-sectional view illustrating an adaptor of the invention;
{Fig. 3}
   Fig. 3 is a perspective view illustrating the adaptor of the invention;
{Fig. 4}
   Fig. 4 is a partial, perspective view illustrating a part cut out from the adaptor of the invention;
{Fig. 5}
   Fig. 5 is a partial, enlarged view illustrating a leaf spring portion, a viscoelastic member and a restraint of the adaptor of the invention;
{Fig. 6}
   Fig. 6 is a longitudinal, cross-sectional view illustrating the adaptor of the invention;
{Fig. 7}
   Fig. 7 is a longitudinal, cross-sectional view illustrating the adaptor of the invention;
{Fig. 8}
   Fig. 8 is a top view illustrating a modification of the adaptor of the invention;
{Fig. 9}
   Fig. 9 is a side view illustrating a support system using a conventional adaptor and a spring; and
{Fig. 10}
   Fig. 10 is a side view illustrating a support system using the adaptor of the invention.

### {Description of Embodiments}

Embodiments according to the invention will be described hereinafter with reference to the drawings.
First, a configuration of a launch vehicle 10 will be described. Fig. 1 is a longitudinal, cross-sectional view illustrating a leading end portion of the launch vehicle 10 of the invention.

The launch vehicle 10 includes an adaptor 1, a payload 2, a rocket portion 3, fairings 4 and the like. The adaptor 1 has a configuration described below, and is provided between the payload 2 and the rocket portion 3 to control a vibration in the rocket axis direction and a rocking vibration. The payload 2 is, for example, an artificial satellite and a probe vehicle. The payload 2 has its lower end connected to an upper end of the adaptor 1, but an upper end of the payload 2 is a free end with being fixed to no places in the launch vehicle 10.

The rocket portion 3 includes a fuel portion loaded with fuel and a rocket engine. The rocket portion 3 has its upper end connected to the lower end of the adaptor 1. If the launch vehicle 10 is, for example, a multi-stage rocket, the launch vehicle 10 reaches a certain height through flight by a rocket engine in the first stage of the rocket portion while the fairings 4 being closed, and subsequently the fairings 4 are divided, and the launch vehicle 10 is further propelled by a rocket engine in the second stage of the rocket portion (for example, the rocket portion 3 in Fig. 1) to reach an orbit. After that, the payload 2 is released from the adaptor 1 and orbits.

Next, the configuration of the adaptor 1 of the invention will be described. Fig. 2 is a longitudinal, cross-sectional view illustrating the adaptor 1 of the invention. Fig. 3 is a perspective view illustrating the adaptor 1 of the invention. Fig. 4 is a partial, perspective view illustrating a part cut out from the adaptor 1 of the invention.

The adaptor 1 includes, for example, an outer tube 11, an inner tube 12, an upper leaf spring 21, a lower leaf spring 22 and a viscoelastic member 31.

The outer tube 11 and the inner tube 12 form a double structure, and a combination of the outer tube 11 and the inner tube 12 configures one tube member. Between the outer tube 11 and the inner tube 12, a viscoelastic member 31 is installed and the rest portion is hollow. Also, the inside of the inner tube 12 is hollow. Each of the outer tube 11 and the inner tube 12 is, for example, in a truncated cone shape, as shown in Fig. 2 and Fig. 3.

The outer tube 11 and the inner tube 12 have rigidity higher than that of the upper leaf spring 21 and the lower leaf spring 22. The outer tube 11 includes a plate member 11a and a rib 11b, as shown in Fig. 4. That is, the plate member 11a is reinforced by the rib 11b to secure rigidity. A structure of the inner tube 12 is also similar to that of the outer tube 11. The structure of the outer tube 11 and the inner tube 12 is not limited to this example, but may have other any configurations.

The upper leaf spring 21 and the lower leaf spring 22 are one example of the first elastic member and the second elastic member, respectively, and for example, are in a ring shape. The upper leaf spring 21 is provided at the upper end of the tube member including the outer tube 11 and the inner tube 12, between the outer tube 11 and the inner tube 12. And, the lower leaf spring 22 is provided at the lower end of the tube member including the outer tube 11 and the inner tube 12, between the outer tube 11 and the inner tube 12. Outer circumferences of the upper leaf spring 21 and the lower leaf spring 22 are coupled to the outer tube 11, and inner circumferences of the upper leaf spring 21 and the lower leaf spring 22 are coupled to the inner tube 12. The upper leaf spring 21 and the lower leaf spring 22 are coupled to the outer tube 11 and the inner tube 12, for example, by a fastener.

The upper leaf spring 21 and the lower leaf spring 22 have rigidity in the direction perpendicular to the rocket axis direction (in the horizontal direction in Fig. 2) higher than that in the rocket axis direction (in the vertical direction in Fig. 2). In the aspect ratio of a length in the radial direction to a plate thickness of the upper leaf spring 21 and the lower leaf spring 22 in the cross-sections taken by cutting them in the radial direction, the length in the radial direction is larger than the plate thickness. Because of having these characteristics or shapes, the upper leaf spring 21 and the lower leaf spring 22 have a lower bending rigidity and a higher tensile and compression rigidities.

The leaf spring is generally used as a structural member, and utilizing the leaf spring as the first elastic member and the second elastic member can allow the adaptor 1 to control a vibration in the structurally stable manner.

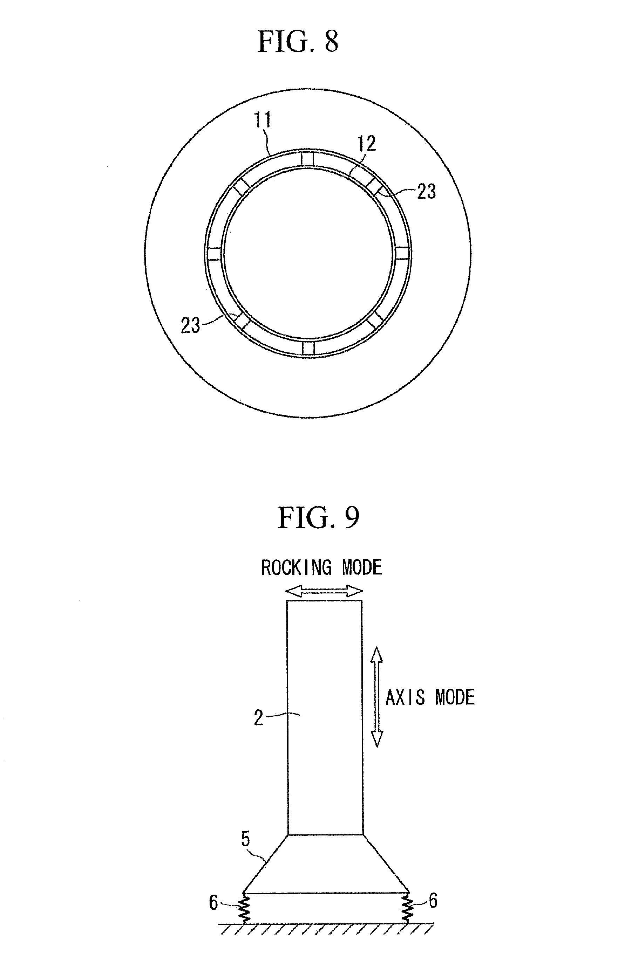

In the description of the invention, one example that the upper leaf spring 21 and the lower leaf spring 22 are used as the first elastic member and the second elastic member has been described, but the invention is not limited to this example. The first elastic member or the second elastic member may have rigidity in the direction perpendicular to the rocket axis direction higher than that in the rocket axis direction. Referring to Fig. 8, a modification of the first elastic member will be described. Fig. 8 is a top view illustrating the modification of the adaptor 1 of the invention. A rod-shaped member 23 has rigidity in the direction perpendicular to the rocket axis direction higher than that in the rocket axis direction. The rod-shaped member 23 may have a circular cross-section or a polygonal cross-section such as a square cross-section. And, the rod-shaped members 23 are plurally disposed radially at the upper ends of the outer tube 11 and the inner tube 12 as the first elastic member. Similarly, the rod-shaped members may be plurally disposed radially also at the lower end of the outer tube 11 and the inner tube 12. In such a configuration, similarly to the upper leaf spring 21 and the lower leaf spring 22, the member between the outer tube 11 and the inner tube 12 has a lower bending rigidity and a higher tensile and compression rigidities.

The viscoelastic member 31 shown in Fig. 2 is one example of the second damping member, and is provided between the double structure including the outer tube 11 and the inner tube 12, with its one end being connected to the outer tube 11 and the other end thereof being connected to the inner tube 12. Provision of the viscoelastic member 31 can enable the adaptor 1 to efficiently attenuate a vibration in the rocket axis direction and a rocking vibration acting on the payload 2. The viscoelastic member 31 is, for example, acrylic polymer, and when the viscoelastic member 31 is deformed by a shear force acting thereon while keeping an elastic characteristic, it converts the deformation force into thermal energy, thus attenuating a vibration.

The second damping member of the invention is not limited to the viscoelastic member 31 described above, and may be a wire-rope (for example, Wire Rope Isolators available from ITT ENIDINE INC,). The wire-rope, while keeping an elastic characteristic through deflection, converts a frictional force therein into thermal energy, thus attenuating a vibration.

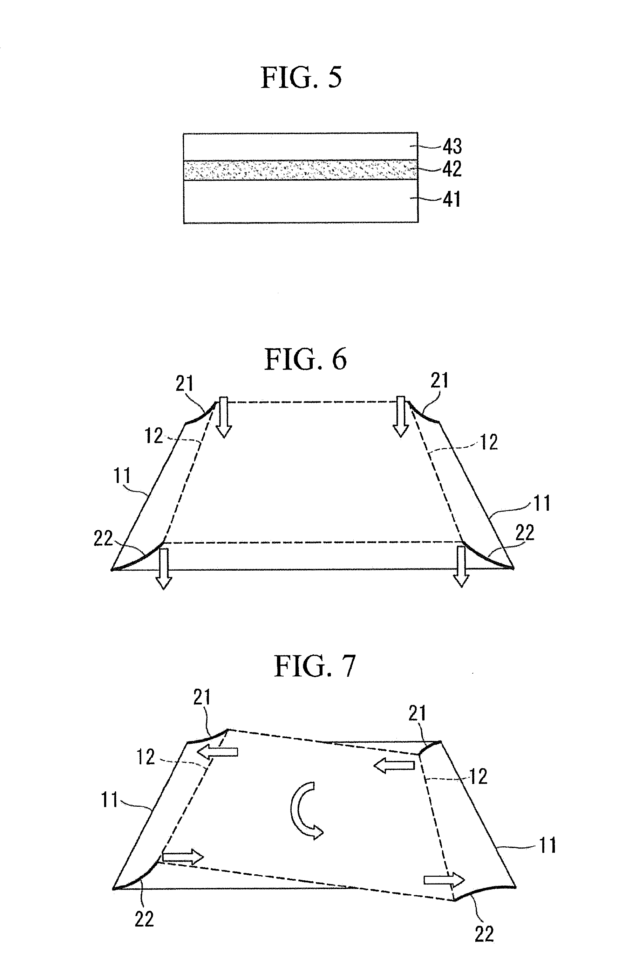

The upper leaf spring 21 and the lower leaf spring 22 may be configured from a simple member, and also, as shown in Fig. 5, a viscoelastic member 42 may be attached along a leaf spring portion 41. Fig. 5 is a partial, enlarged view illustrating the leaf spring portion 41, the viscoelastic member 42 and a restraint 43 of the adaptor 1 of the invention. The leaf spring portion 41 is the upper leaf spring 21 or the lower leaf spring 22. The viscoelastic member 42 is one example of the first damping member, and configured to be installed between the restraint 43 and the leaf spring portion 41. The restraint 43 is a member that is less deformed than the leaf spring portion 41, so that the viscoelastic member 42 can be further distorted. The viscoelastic member 42 has a material and characteristics similar to the viscoelastic member 31 described above.

When the adaptor 1 is installed in the launch vehicle 10, the adaptor 1 is linked to the payload 2 on the inner tube 12 side of the upper end of the tube member, that is, at the place shown by the symbol 21a in Fig. 2 and Fig. 4, and linked to the leading end of the rocket portion 3 on the outer tube 11 side of the lower end of the tube member, that is, at the place shown by the symbol 22a in Fig. 2 and Fig. 4. The adaptor 1 may be linked to the payload on the outer tube 11 side of the upper end of the tube member, and then, the adaptor 1 is linked to the leading end of the rocket portion 3 on the inner tube 12 side of the lower end of the tube member.

Next, operation of the adaptor 1 of the invention will be described. Here, the case will be described where the adaptor 1 is linked to the payload 2 on the inner tube 12 side of the upper end of the tube member, and linked to the leading end of the rocket portion 3 on the outer tube 11 side of the lower end of the tube member. Fig. 6 and Fig. 7 are longitudinal, cross-sectional views illustrating the adaptor 1 of the invention. Fig. 6 shows a state in which the inner tube 12 of the adaptor 1 undergoes a vibration in the rocket axis direction to be moved in the axis direction. And, Fig. 7 shows a state in which the inner tube 12 of the adaptor 1 undergoes a rocking vibration to be displaced in the outer tube 11 in the rotational direction.

When a vibration acts on the adaptor 1 in the rocket axis direction, the upper leaf spring 21 and the lower leaf spring 22, as shown in Fig. 6, are bent to be deformed by the end linked to the outer tube 11 as a fixed end and by the other end, that is, the end linked to the inner tube 12 as a free end. As a result, the adaptor 1 can softly control the vibration in the rocket axis direction through the bending deformation of the upper leaf spring 21 and the lower leaf spring 22.

On the other hand, for example, when the payload 2 moves in a rocking motion and the rocking vibration acts on the adaptor 1, then the upper leaf spring 21 and the lower leaf spring 22, as shown in Fig. 7, can withstand through rigidity in the axial force direction (i.e. in the direction perpendicular to the rocket axis direction), thus controlling the rocking vibration of the payload 2.

Because the upper leaf spring 21 and the lower leaf spring 22 are disposed at two points with an arm length in the rocket axis direction, the adaptor of the invention can have a higher rigidity against a rocking vibration.

Also, when the viscoelastic member 31 and the like are provided between the outer tube 11 and the inner tube 12, and when the viscoelastic member 42 is provided along the upper leaf spring 21 and the lower leaf spring 22, then a vibration in the rocket axis direction and a rocking vibration acting on the payload 2 can be efficiently attenuated.

A conventional adaptor has a single structure and the adaptor 1 of the invention has the double structure, but the adaptor 1 may have a like strength as that of the conventional adaptor by combining the outer tube 11 and the inner tube 12, so that an increase in total weight can be controlled to the minimum, compared with the conventional adaptor. Further, the invention does not need a functional component such as a laminated rubber and a torsion bar, and an increase in weight can be controlled to the minimum.

In addition, the adaptor 1 has the outer tube 11 and the inner tube 12 in an approximately the same shape as that of an existing adaptor, and the technology for manufacturing the existing adaptor can be diverted. Furthermore, the adaptor 1 is easy to assemble and its structure is comparatively simple, so that product management can be reduced. As a result, an increase in manufacturing cost of the adaptor 1 of the invention can be controlled.

Yet further, because the adaptor 1 of the invention can control a vibration in the rocket axis direction and a rocking vibration, the adaptor 1 can fulfill functions of both an adaptor and a vibration control mechanism conventionally available, so that utilizing the adaptor 1 in the launch vehicle 10 eliminates a vibration control mechanism such as a conventional one. Accordingly, as shown in Fig. 1, a location of the upper end of a conventional payload is shown by the dashed and double-dotted lines 2a, and compared with it, a location of the payload 2 can be lowered by the height of the vibration control mechanism conventionally needed. Therefore, a wider space can be secured in the fairings 4 of the launch vehicle 10, compared with a conventional space.

Also, a complex slide portion or the like provided in the conventional vibration control mechanism can be eliminated, and the adaptor 1 of the invention can has a higher product reliability.

As described above, the adaptor 1 of the invention softly controls a vibration acting on the payload in the rocket axis direction through the bending deformation, and controls a rocking vibration by getting rigid in the axial force direction. Further, the adaptor 1 of the invention has the simple structure diverted from a structure type of the conventional adaptor.

Next, supposing a standard artificial satellite as one example of the payload 2, examples of the adaptor 1 of the invention and a conventional adaptor 5 designed by way of trial will be described. The conventional adaptor 5 has the single structure, and as shown in Fig. 9, on the lower surface of the adaptor 5, a spring 6 having elasticity in the axis direction is installed to support the adaptor 5. Fig. 9 is a side view illustrating a support system using the conventional adaptor 5 and the spring 6.

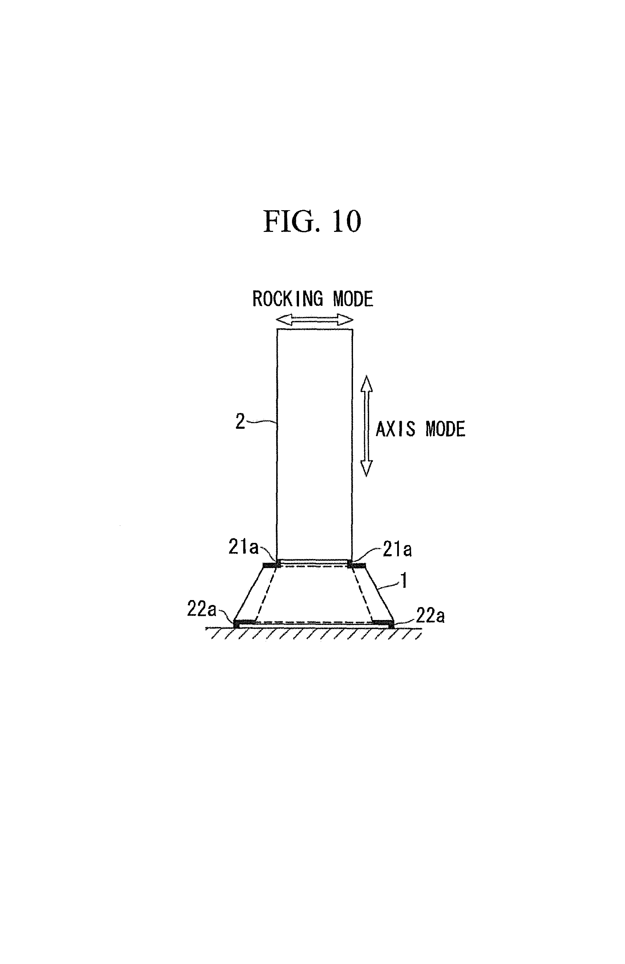

On the other hand, the adaptor 1 of the invention has the configuration described above and the double structure. The adaptor 1 supports the artificial satellite 2 at the place of the upper end shown by the symbol 21a, and is supported to contact with the ground at the place of the lower end shown by the symbol 22a. Fig. 10 is a side view illustrating a support system using the adaptor 1 of the invention. Then, with respect to respective support systems using the conventional adaptor 5 and the spring 6, and the adaptor 1 of the invention, natural vibration frequencies in the axis direction and in the rocking direction will be compared to each other. When the rigidities in the axis direction are set to be equivalent to each other, the natural vibration frequencies in the rocking direction are compared to each other, and the result is shown in Table 1.

**{Table 1}**

| | Conventional Support System | Support System of the Invention |
|---|---|---|
| Rocking Direction | 4 [Hz] | 10 [Hz] |
| Axis Direction | 11 [Hz] | 11 [Hz] |

As will be appreciated from the result shown in Table 1, with respect to the natural vibration frequencies of the support system using the adaptor 1 of the invention, the natural vibration frequency in the rocking direction is 2.5 times that of the conventional support system. This means that the rocking rigidity obtained from the support system using the adaptor 1 of the invention is 6.3 times that of the conventional support system. That is, even if utilizing the adaptor 1 of the invention lowers the rigidity in the axis direction, the rocking rigidity can be prevented from being excessively lowered. Sizing the adaptor 1 can further improve the rocking rigidity.

In the above description, the first elastic member or the second elastic member provided in the tube member having the double structure including the outer tube and the inner tube have rigidity in the direction perpendicular to the rocket axis direction higher than that in the rocket axis direction, so that the adaptor controls a vibration of the payload in the axis direction when a vibration load acts in the rocket axis direction, and the adaptor controls a rocking vibration of the payload when a rocking vibration acts. On the other hand, the invention is not limited to this example, but the adaptor may be an adaptor that controls a vibration of the payload in the axis direction when a vibration load acts in the rocket axis direction, and controls a rocking vibration of the payload when a rocking vibration acts. Therefore, a member capable of configuring such an adaptor may be used even if it is not a member that has rigidity in the direction perpendicular to the rocket axis direction higher than that in the rocket axis direction as the first elastic member or the second elastic member.

### {Reference Signs List}

- 1: adaptor
- 2: payload
- 3: rocket portion
- 4: fairing
- 10: launch vehicle
- 11: outer tube
- 12: inner tube
- 21: upper leaf spring (first elastic member)
- 22: lower leaf spring (second elastic member)
- 31: viscoelastic member

## Claims

1. An adaptor for controlling a vibration of a payload housed in a payload launch vehicle and provided between the payload and a rocket portion, the adaptor comprising:
a tube member having a double structure including an outer tube and an inner tube;
a first elastic member coupled to the outer tube and the inner tube at one end of the tube member; and
a second elastic member coupled to the outer tube and the inner tube at the other end of the tube member, wherein
the adaptor is linked to the payload on the inner tube side or the outer tube side on one end side of the tube member, and
the adaptor is linked to a leading end of the rocket portion on the outer tube side or the inner tube side on the other end side of the tube member.

2. The adaptor according to claim 1, wherein the first elastic member or the second elastic member has rigidity in a direction perpendicular to a rocket axis direction higher than that in the rocket axis direction.

3. The adaptor according to claim 1 or 2, wherein a first damping member is provided along the first elastic member or the second elastic member.

4. The adaptor according to any one of claims 1 to 3, wherein a second damping member is provided between the outer tube and the inner tube.

5. The adaptor according to any one of claims 1 to 4, wherein the first elastic member or the second elastic member is a leaf spring.

6. A payload launch vehicle comprising the adaptor according to any one of claims 1 to 5.
